# EUROPÄISCHE PATENTANMELDUNG

(11) **EP 4 803 966 A1**
(43) Veröffentlichungstag der Anmeldung: **09.09.2026**
(21) Anmeldenummer: 26160554.7
(22) Anmeldetag: 25.02.2026
(51) Int. Cl.: G05B 19/401, H04L 69/24, H04W 4/80, H04W 76/19

(54) **DRAHTLOS-KOMMUNIKATIONSTECHNIK FÜR DEN MASCHINENRAUM EINER WERKZEUGMASCHINE**

(30) Priorität: 05.03.2025 DE 102025108440
(71) Anmelder: Blum-Novotest GmbH, 88287 Grünkraut (DE)
(72) Erfinder: MAIER, Gregor, 88287 Gruenkraut (DE); HARSCHER, Christian, 88287 Gruenkraut (DE)
(74) Vertreter: Röthinger, Rainer

(57) **Zusammenfassung**

Es wird ein Verfahren (400) zur drahtlosen Kommunikation zwischen einer ersten Funk-Basisstation, FBS (32A), und einem Funk-Endgerät, FEG (28), im Maschinenraum (12) wenigstens einer Werkzeugmaschine, WZM (14), beschrieben. Der WZM ist wenigstens ein Feldgerät, FG (24), zugeordnet, für das Daten drahtlos zwischen dem FEG als einem dem FG zugeordnetem Drahtlos-Endpunkt und der ersten FBS als einem einer Steuerung (16) der WZM zugeordneten Drahtlos-Endpunkt ausgetauscht werden sollen. Dem FEG ist ein FEG-Identifikator, FEG-ID, und der ersten FBS ein erster FBS-Identifikator, FBS-ID, zugeordnet. Das Verfahren umfasst die folgenden, vom FEG ausgeführten Schritte: drahtloses Senden (404) einer Anfrage-Nachricht, die wenigstens den FEG-ID und einen vom ersten FBS-ID verschiedenen zweiten FBS-ID enthält, welcher einer zweiten FBS (32B) zugeordnet ist, mit welcher das FEG zuletzt auf das FG bezogene Daten ausgetauscht hat; und drahtloses Empfangen (410) einer Antwort-Nachricht von der ersten FBS als Reaktion auf die Anfrage-Nachricht, wobei die Antwort-Nachricht dem FEG anzeigt, dass (i) die erste FBS einen auf das FG bezogenen Datenaustausch mit dem FEG anfragt und (ii) ob die erste FBS über für den Datenaus-tausch erforderliche FEG-Konfigurationsinformationen verfügt.

## Beschreibung

### Technisches Gebiet

Die vorliegende Erfindung betrifft allgemein das Gebiet der Werkzeugmaschinen und insbesondere den drahtlosen Datenaustausch in Bezug auf ein im Maschinenraum einer Werkzeugmaschine betriebenes Feldgerät.

### Hintergrund

Im Werkzeugraum einer Werkzeugmaschine kommen häufig zahlreiche Feldgeräte wie Sensoren und Aktuatoren zum Einsatz. Für auf die Werkzeugmaschine bezogene Steueraufgaben müssen die Feldgeräte fortlaufend abgefragt und angesteuert werden. Ein Datenaustausch zwischen den Feldgeräten und einer Steuerung der Werkzeugmaschine kann drahtgebunden oder drahtlos erfolgen.

In einem Beispiel wird ein von der Werkzeugmaschine zu bearbeitendes Werkstück unter Verwendung eines Spannmittels auf eine Palette gespannt. Ein als Drucksensor ausgebildetes Feldgerät ist dazu vorgesehen, den Spannzustand des Spannmittels zu überwachen. Aus Sicherheitsgründen ergibt es Sinn, den Spannzustand des Werkstücks zu überprüfen, bevor mit der Werkstückbearbeitung begonnen wird. Zu diesem Zweck fragt die Steuerung der Werkzeugmaschine den am Spannmittel angeordnete Drucksensor ab, bevor sie die Werkzeugmaschine zur Bearbeitung des Werkstücks ansteuert.

Bei einer drahtlosen Implementierung der Kommunikation zwischen Drucksensor und Werkzeugmaschinen-Steuerung ist auf der Palette ein Funk-Endgerät angeordnet, das die vom Drucksensor erhaltenen Daten drahtlos an eine Funk-Basisstation sendet. Die Funk-Basisstation leitet die Drucksensor-Daten dann an die Werkzeugmaschinen-Steuerung zur Bearbeitung weiter. Handelt es sich bei dem Feldgerät auf der Palette um einen Aktuator (z. B. zum Aufbau eines Spanndrucks am Spannmittel), kann die Kommunikation auch in die umgekehrte Richtung stattfinden. Von der Werkzeugmaschinen-Steuerung erhaltene Ansteuerdaten werden dann von der Funk-Basisstation drahtlos an das Funk-Endgerät auf der Palette gesendet. Das Funk-Endgerät leitet die Ansteuerdaten dann an den Aktuator weiter.

Ein Funk-Endgerät muss vor dessen Einsatz für den drahtlosen Datenaustausch konfiguriert werden. Diese Konfiguration kann sich auf die für den Datenaustausch mit der Funk-Basisstation zu verwendende Frequenz (bzw. das zu verwendenden Frequenzband) beziehen. Um Interferenzen zwischen benachbart betriebenen Funk-Endgeräte zu vermeiden, können die Funk-Endgeräte (z.B. manuell unter Verwendung eines Magnetstifts) auf unterschiedliche Frequenzen oder unterschiedliche Frequenzbänder eingestellt werden. Dazu müssen der Funk-Basisstation aber Informationen vorliegen, auf welche Frequenz oder welches Frequenzband ein bestimmtes Funk-Endgerät eingestellt ist, um mit diesem kommunizieren zu können. Mit anderen Worten müssen der Funk-Basisstation die eingestellte Frequenz bzw. das eingestellte Frequenzband (und möglicherweise andere Konfigurationsinformationen) des Funk-Endgeräts bereitgestellt werden. Dieser Austausch von Konfigurationsinformationen wird auch als Pairing ("Anlernen") bezeichnet.

Es hat sich herausgestellt, dass der Austausch von Konfigurationsinformationen mit einem Signalisierungsaufwand einhergeht. Dieser Signalisierungsaufwand ist in der Regel akzeptabel, wenn immer dieselbe Palette (mit demselben Funk-Endgerät) derselben Werkzeugmaschine zugeführt wird, also ein 1:1 Verhältnis zwischen Palette und Werkzeugmaschine besteht. Das Pairing muss dann über einen längeren Zeitraum hinweg nicht aktualisiert werden.

Anders verhält es sich, wenn mehrere mit jeweils einem Werkstück bestückte Paletten dynamisch einer von mehreren Werkzeugmaschinen zur Werkstückbearbeitung zugeführt werden. In einer solchen Implementierung werden an einem Rüstplatz einer Fertigungshalle die Werkstücke auf die Paletten gespannt. Jede der Paletten wandert dann zur Werkstückbearbeitung vom Rüstplatz zu einer von mehreren in der Fertigungshalle aufgestellten Werkzeugmaschinen, die dazu ausgebildet sind, einen bestimmten Bearbeitungsvorgang in paralleler Weise auszuführen. Eine bestimmte Palette wird dann derjenigen Werkzeugmaschine zugeführt, die aktuell freie Bearbeitungskapazitäten hat. Mit anderen Worten, ist die Zuordnung von Palette und Werkzeugmaschine zufällig, d.h. lediglich von den aktuellen Kapazitäten abhängig, sodass ohne Rücksicht auf ein mögliches vorheriges Pairing Paletten und Werkzeugmaschinen miteinander kombiniert werden. Vor der Werkstückbearbeitung muss ein Pairing ausgeführt werden, auch wenn die gleiche Palette möglicherweise zehn Bearbeitungsvorgänge zuvor bereits dieser Werkzeugmaschine zugeführt wurde.

Noch komplizierter wird die Situation, wenn die Funk-Endgeräte von verschiedenen Herstellern oder aus verschiedenen Baureihen stammen und daher noch nicht einmal dasselbe Funk-Protokoll unterstützen.

### Kurzer Abriss

Ausgehend von diesen Gegebenheiten stellt sich die Aufgabe, eine oder mehrere der oben geschilderten Problemstellungen oder andere, nachfolgend erläuterte Problemstellungen anzugehen. Gelöst wird diese Aufgabe durch die vorliegende Erfindung gemäß den unabhängigen Ansprüchen.

Gemäß einem ersten Aspekt wird ein Drahtlos-Kommunikationssystem für einen Maschinenraum wenigstens einer Werkzeugmaschine (WZM) angegeben. Das System umfasst eine Funk-Basisstation (FBS), die eingerichtet ist zur drahtlosen Kommunikation gemäß einem ersten Funk-Protokoll und wenigstens einem zweiten Funk-Protokoll, das sich vom ersten Funk-Protokoll unterscheidet. Das System umfasst ferner wenigstens ein im Maschinenraum betreibbares erstes Feldgerät (FG), wenigstens ein im Maschinenraum betreibbares zweites FG und ein dem wenigstens einen ersten FG zugeordnetes erstes Funk-Endgerät (FEG), das eingerichtet ist zur drahtlosen Kommunikation mit der FBS gemäß dem ersten Funk-Protokoll für einen auf das wenigstens eine erste FG bezogenen Datenaustausch. Außerdem umfasst das System ein dem wenigstens einen zweiten FG zugeordnetes zweites FEG, das eingerichtet zur drahtlosen Kommunikation mit der FBS gemäß dem wenigstens einen zweiten Funk-Protokoll für einen auf das wenigstens eine zweite FG bezogenen Datenaustausch.

Im Sinne dieser Offenbarung erfordert ein Datenaustausch keine bidirektionale Kommunikation zwischen FEG und FBS; eine unidirektionale Kommunikation ist häufig ausreichend. Nichtsdestotrotz kann der Datenaustausch auch bidirektional stattfinden.

Der auf ein bestimmtes FG bezogene Datenaustausch kann ein Weiterleiten von Daten in Richtung des FG oder aus der Richtung des FG umfassen. Die in Richtung des FG weitergeleiteten Daten können dazu bestimmt sein, eine Aktion des FG auszulösen. Die aus der Richtung des FG weitergeleiteten Daten können von dem FG generiert (berechnet, gemessen, usw.) worden sein.

Gemäß einer Variante umfasst die FBS eine als Software-Defined Radio (SDR) konfigurierte Funk-Schnittstelle, die das erste Funk-Protokoll sowie das wenigstens eine zweite Funk-Protokoll unterstützt. Gemäß einer zweiten Variante umfasst die FBS eine als erste Hardware ausgeführte erste Funk-Schnittstelle, die das erste Funk-Protokoll unterstützt, und wenigstens eine als zweite Hardware ausgeführte zweite Funk-Schnittstelle, die das wenigstens eine zweite Funk-Protokoll unterstützt. Beide Varianten sind kombinierbar, was bedeutet, dass die FBS sowohl eine als SDR konfigurierte Funk-Schnittstelle als auch eine oder mehrere, als separate Hardware ausgeführte Funk-Schnittstellen umfassen kann.

Das erste Funk-Protokoll und das wenigstens eine zweite Funk-Protokoll können ausausgewählt sein aus Bluetooth, insbesondere Bluetooth Low Energy oder Bluetooth Mesh, IO-Link Wireless, Chirp, Matter, Thread, LoRaWAN, UWB, NFC, Wireless-Profinet, ZigBee, RFID, WLAN, einem ersten proprietären Funk-Protokoll und einem zweiten proprietären Funkprotokoll. Der Fachperson eröffnet sich der Einsatz vorhergehender oder noch umzusetzender, experimenteller oder weiterentwickelter Funk-Protokolle. Jedem Funk-Protokoll kann ein dedizierter Protokoll-Stack zugeordnet sein, der von dem jeweiligen FEG und der FBS implementiert wird.

Das erste FEG und das zweite FEG können von verschiedenen Herstellern, aus verschiedenen Modellgenerationen oder aus verschiedenen Baureihen stammen. Durch das FBS-seitige Unterstützen mehrerer Funk-Protokolle kann so eine Kompatibilität über verschiedene Hersteller, Baureihen oder Modellgenerationen hinweg gewährleistet werden.

Das wenigstens eine erste FG kann wenigstens einen ersten Sensor und/oder wenigstens einen ersten Aktuator umfassen. Zusätzlich oder alternativ dazu kann das wenigstens eine zweite FG wenigstens einen zweiten Sensor und/oder wenigstens einen zweiten Aktuator umfassen. Der wenigstens eine erste Sensor und/oder der wenigstens eine zweite Sensor kann ausgewählt sein aus einem optischen Sensor, einem taktilen Sensor, einem Drucksensor, einem Temperatursensor, einen induktiven oder kapazitiven Abstandssensor, einem Vibrationssensor, einem Beschleunigungssensor, einem akustischen Sensor, einem NFC-Lesegerät und einem RFID-Lesegerät. Der Fachperson ist bewusst, dass diese Beispiele nicht ausschließlich sind.

Das jeweilige (erste und/oder zweite) FEG kann baulich mit dem jeweiligen wenigstens einen (ersten und/oder zweiten) FG eine bauliche Einheit bilden. Alternativ dazu kann das jeweilige FEG eine eigenständige Komponente sein, die separat von dem jeweiligen wenigstens einen FG handhabbar ist. So kann das jeweilige FEG wahlweise mit wenigstens einem aus einem FG-Satz ausgewählten FG frei kombiniert werden. In diesem Fall kann eine FG-Leistungsversorgung über das jeweilige FEG erfolgen.

Das Drahtlos-Kommunikationssystem kann ferner eine WZM-Steuerung für die wenigstens eine WZM umfassen. Der wenigstens einen WZM kann sowohl das erste als auch das zweite FG zugeordnet sein. Beispielsweise kann einer ersten WZM das erste FG zugeordnet sein und einer zweiten WZM das zweite FG zugeordnet sein. Alternativ dazu können sowohl das erste als auch das zweite FG einer einzigen WZM zugeordnet sein. Die Zuordnung kann derart erfolgen, dass das jeweilige FG eine Funktion (z.B. als Sensor oder Aktuator) besitzt, die sich auf die WZM (z.B. ein Messtaster oder ein Spannmittel der WZM) oder ein von der WZM zu bearbeitendes Werkstück bezieht.

Das Drahtlos-Kommunikationssystem kann eingerichtet sein, Daten drahtlos zwischen dem ersten und zweiten FEG (als jeweils einem dem ersten bzw. zweiten FG zugeordnetem Drahtlos-Endpunkt) und der FBS (als einem der WZM-Steuerung zugeordneten Drahtlos-Endpunkt) auszutauschen. Die Kommunikationsstrecken zwischen dem jeweiligen FEG und dem jeweiligen FG einerseits und zwischen dem FBS und der WZM-Steuerung andererseits können drahtlos, drahtgebunden oder abschnittsweise beides sein.

Das Drahtlos-Kommunikationssystem kann ferner eine Funk-Protokoll-Steuerung (FPS) zur selektiven Aktivierung des ersten Funk-Protokolls und/oder des wenigstens einen zweiten Funk-Protokolls zur Kommunikation mit dem entsprechenden ersten und/oder zweiten FEG umfassen. Die FPS kann zumindest teilweise in der FBS implementiert sein. Die selektive Aktivierung eines bestimmten Funk-Protokolls kann zur Vorbereitung eines Datenaustausches zwischen der FBS und dem jeweiligen FEG in Bezug auf ein bestimmtes FG erfolgen. Die selektive Aktivierung kann seitens der FPS als Reaktion auf den Empfang von Informationen hin erfolgen, die ein bestimmtes FEG identifizieren (z.B. einen entsprechenden Identifikator). Solche Informationen können von der FPS auf verschiedene Art und Weise empfangen werden, beispielsweise von der WZM-Steuerung. Letztere wiederum kann diese Informationen von der WZM erhalten haben, welcher das bestimmte FEG fest oder zeitweise zugeordnet ist. Die WZM kann daher dazu ausgebildet sein, diese Informationen von der FEG oder einer der FEG zugeordneten Komponente, etwa einer Palette zur Aufnahme eines Werkstücks, zu erhalten.

Ein weiterer Aspekt ist auf ein Verfahren zur Durchführung in einem Drahtlos-Kommunikationssystem gerichtet, wobei das Drahtlos-Kommunikationssystem für einen Maschinenraum wenigstens einer WZM vorgesehen ist. Das Drahtlos-Kommunikationssystem umfasst eine FBS, im Maschinenraum betreibbare erste und zweite FG, ein dem ersten FG zugeordnetes erstes FEG und ein dem zweiten FG zugeordnetes zweites FEG. Das Verfahren wird von der FBS durchgeführt und umfasst eine drahtlose Kommunikation gemäß einem ersten Funk-Protokoll mit dem wenigstens einen ersten FEG für einen auf das wenigstens einen erste FG bezogenen Datenaustausch. Das Verfahren umfasst ferner eine drahtlose Kommunikation gemäß wenigstens einem zweiten Funk-Protokoll, das sich vom ersten Funk-Protokoll unterscheidet, mit dem zweiten FEG für einen auf das wenigstens eine zweite FG bezogenen Datenaustausch.

Das Verfahren kann von dem vorstehend geschilderten Drahtlos-Kommunikationssystem durchgeführt werden. So kann eine FBS beispielsweise die Kommunikation zu einem ersten FG (z.B. ausgeführt als Messtaster, alternativ als smarter Werkzeughalter oder vergleichbare, von einer Werkzeugspindel aufnehmbare Werkzeuge oder Hilfsmittel) mit zugeordnetem ersten FEG herstellen und/oder aufrecht erhalten und zusätzlich in vorteilhafter Weise gleichzeitig die Kommunikation zu einem zweiten FG (z.B. ausgeführt als Spannmittel oder einem Spannmittel zugeordnet) mit zugeordnetem zweiten FEG herstellen und/oder aufrecht erhalten.

Die drahtlose Kommunikation gemäß dem ersten Funk-Protokoll und die drahtlose Kommunikation gemäß dem zweiten Funk-Protokoll können gleichzeitig stattfinden. Sind mehrere WZM und daher mehrere Maschinenräume vorhanden, können das erste FEG und das zweite FEG im gleichen oder in unterschiedlichen Maschinenräumen angeordnet sein.

Das vorstehend erörterte erste und/oder zweite FEG und die vorstehend erörterte FBS können gemäß den nachfolgenden Aspekten betrieben werden und konfiguriert sein.

Ein weiterer Aspekt betrifft ein Verfahren zur drahtlosen Kommunikation zwischen einer ersten FBS und einem FEG im Maschinenraum wenigstens einer WZM, wobei der WZM wenigstens ein FG zugeordnet ist, für das Daten drahtlos zwischen dem FEG als einem dem FG zugeordnetem Drahtlos-Endpunkt und der ersten FBS als einem einer Steuerung der WZM zugeordneten Drahtlos-Endpunkt ausgetauscht werden sollen, wobei dem FEG ein FEG-Identifikator (FEG-ID) und der ersten FBS ein erster FBS-Identifikator (FBS-ID) zugeordnet ist. Das Verfahren umfasst die folgenden, vom FEG ausgeführten Schritte: drahtloses Senden einer Anfrage-Nachricht, die wenigstens den FEG-ID und einen vom ersten FBS-ID verschiedenen zweiten FBS-ID enthält, welcher einer zweiten FBS zugeordnet ist, mit welcher das FEG zuletzt auf das FG bezogene Daten ausgetauscht hat; und drahtloses Empfangen einer Antwort-Nachricht von der ersten FBS als Reaktion auf die Anfrage-Nachricht, wobei die Antwort-Nachricht dem FEG anzeigt, dass (i) die erste FBS einen auf das FG bezogenen Datenaustausch mit dem FEG anfragt und (ii) ob die erste FBS über für den Datenaustausch erforderliche FEG-Konfigurationsinformationen verfügt.

Ein komplementärer Aspekt betrifft ein Verfahren zur drahtlosen Kommunikation zwischen einer ersten FBS und einem FEG im Maschinenraum wenigstens einer WZM, wobei der WZM wenigstens ein FG zugeordnet ist, für das Daten drahtlos zwischen dem FEG als einem dem FG zugeordnetem Drahtlos-Endpunkt und der ersten FBS als einem einer Steuerung der WZM zugeordneten Drahtlos-Endpunkt ausgetauscht werden sollen, wobei dem FEG ein FEG-ID und der ersten FBS ein erster FBS-ID zugeordnet ist. Das Verfahren umfasst die folgenden, von der ersten FBS ausgeführten Schritte: drahtloses Empfangen einer Anfrage-Nachricht, die wenigstens den FEG-ID und einen zweiten FBS-ID, der sich vom ersten FBS-ID unterscheidet, enthält; Überprüfen, ob die erste FBS auf FEG-Konfigurationsinformationen Zugriff hat, die der FEG-ID zugeordnet und die für einen auf das FG bezogenen Datenaustausch mit dem FEG erforderlich sind; und drahtloses Senden einer Antwort-Nachricht als Reaktion auf die Anfrage-Nachricht, wobei die Antwort-Nachricht dem FEG anzeigt, (i) dass die erste FBS den auf das FG bezogene Datenaustausch mit dem FEG anfragt und (ii) ob die erste FBS über die für den Datenaustausch erforderlichen FEG-Konfigurationsinformationen verfügt.

Die beiden vorstehend erläuterten Aspekte können getrennt von oder in Kombination mit den weiter oben beschriebenen Aspekten implementiert werden.

Die beiden vorstehend erläuterten Aspekte können in geeigneten Situationen das Pairing ("Anlernen") dahingehend obsolet machen, dass kein Austausch von FEG-Konfigurationsinformationen mehr erforderlich ist oder dieser Austausch zumindest reduziert werden kann.

Die FEG-Konfigurationsinformationen können einen oder mehrere Parameter enthalten. Der oder die Parameter können insbesondere für eine Drahtlos-Kommunikation zwischen der ersten FBS und dem FEG erforderlich sein. Der oder die Parameter können sich auf eine Einstellung der Funk-Schnittstelle des FEG beziehen. Beispielhafte Parameter umfassen einen oder mehrere der folgenden Parameter:
- eine oder mehrere von dem FEG unterstützte oder aktuell eingestellte Funkfrequenzen für den Datenaustausch,
- eines oder mehrere von dem FEG unterstützte oder aktuell eingestellte Funk-Protokolle,
- eine oder mehrere von dem FEG unterstützte oder aktuell eingestellte Sendungswiederholungsstrategien, und
- die FEG-ID.

Die Antwort-Nachricht kann wenigstens den ersten FBS-ID enthalten. Der erste und jeder weitere FBS-ID kann eine Seriennummer der jeweiligen FBS und/oder eine Zufallszahl ausreichender Länge und/oder einen anderen jedenfalls lokal eindeutige Bezeichner zumindest enthalten. Das FEG kann lokal FBS-Konfigurationsinformationen abgespeichert haben, welche wenigstens den zweite FBS-ID enthalten. In diesem Fall kann auf den Erhalt der Antwort-Nachricht der zweite FBS-ID durch den ersten FBS-ID aktualisiert werden. Wie erläutert ist der zweite FBS-ID der zweiten FBS zugeordnet, mit welcher das FEG zuletzt auf das FG bezogene Daten ausgetauscht hat. Dieser Datenaustausch kann aus verschiedenen Gründen beendet worden sein, beispielsweise auf einen Befehl der zweiten FBS hin. Nach Empfang der Antwort-Nachricht ist dem FEG bekannt, dass der nächste Datenaustausch mit der ersten FBS erfolgen wird. Dieser Sachverhalt rechtfertigt die Aktualisierung der FBS-Konfigurationsinformationen, damit das FEG in der nächsten Anfrage-Nachricht dann den ersten FBS-ID senden kann.

Gemäß einer Fallkonstellation zeigt die Antwort-Nachricht dem FEG an, dass die erste FBS über die für den Datenaustausch mit dem FEG erforderlichen FEG-Konfigurationsinformationen verfügt. In diesem Fall kann das Verfahren ferner umfassen einen drahtlosen Austausch der auf das FG bezogenen Daten zwischen dem FEG und der ersten FBS ohne ein vorheriges Senden der FEG-Konfigurationsinformationen vom FEG an die erste FBS. In diesem Zusammenhang kann der Empfang des ersten FBS-ID in der Antwort-Nachricht dem FEG anzeigen, dass die erste FBS über die für den Datenaustausch mit dem FEG erforderlichen FEG-Konfigurationsinformationen bereits verfügt (diese also nicht noch einmal ausgetauscht werden müssen).

In einer anderen Fallkonstellation kann die Antwort-Nachricht dem FEG anzeigen, dass die erste FBS die für den Datenaustausch mit dem FEG erforderlichen FEG-Konfigurationsinformationen benötigt (also über diese Daten nicht verfügt). In diesem Fall kann das Verfahren ferner umfassen ein automatisches drahtloses Senden der FEG-Konfigurationsinformationen vom FEG an die erste FBS vor einem Austausch der auf das FG bezogenen Daten zwischen dem FEG und der ersten FBS (das Senden der FEG-Konfigurationsinformationen kann in einem mehrere Schritte umfassenden Kommunikationsprotokoll erfolgen). In diesem Zusammenhang kann die Antwort-Nachricht wenigstens ein Informationselement, insbesondere ein Flag, enthalten, das dem FEG anzeigt, dass die erste FBS die für den Datenaustausch mit dem FEG erforderlichen FEG-Konfigurationsinformationen benötigt.

In einer Implementierung können dem FEG verschiedene Sätze von FEG-Konfigurationsinformationen zuordenbar sein. Jeder Satz von FEG-Konfigurationsinformationen kann für einen oder mehrere Parameter jeweils einen oder mehrere Parameterwerte umfassen. Bei einem einzigen Parameter (z.B. einer Übertragungsfrequenz) kann somit jeder Parameterwert (jede Übertragungsfrequenz) als ein separater Satz aufgefasst werden. In diesem Fall kann die Anfrage-Nachricht ferner einen Informations-Identifikator enthalten, welcher einem von der FEG aktuell eingestellten Satz von FEG-Konfigurationsinformationen (z.B. einer eingestellten Übertragungsfrequenz) zugeordnet ist. Der Informations-Indikator kann ein aus dem jeweiligen Satz von Konfigurationsinformationen abgeleiteter Code sein, insbesondere ein Hash-Code.

Bei Verwendung eines Informations-Indikators kann das von der ersten FBS durchgeführte Überprüfen, ob die erste FBS auf FEG-Konfigurationsinformationen Zugriff hat, welche für den auf das FG bezogenen Datenaustausch mit dem FEG erforderlich sind, ein Überprüfen umfassen, ob die erste FBS auf FEG-Konfigurationsinformationen Zugriff hat, die dem Informations-Identifikator zugeordnet sind. Bestimmte, beim FBS abgespeicherte FEG-Konfigurationsinformationen können daher sowohl einem bestimmten FEG-ID als auch einem bestimmten Informations-Indikator zugeordnet sein. Ferner können einem bestimmten FEG-ID verschiedene FEG-Konfigurationsinformationen zugeordnet sein, denen wiederum jeweils ein bestimmter Informations-Indikator zugeordnet ist.

Der drahtlose Austausch der auf das FG bezogenen Daten kann über eine private Kommunikationsverbindung zwischen der ersten FBS und dem FEG erfolgt. Diese Verbindung kann eine Unicast-(Punkt-zu-Punkt-)Verbindung sein. Für andere FEG and FBS kann dieser Datenaustausch zwischen der ersten FBS und dem FEG nicht lesbar sein. In diesem Zusammenhang kann der erste FBS-Identifikator oder ein davon abgeleiteter Parameter zum Aufbau der privaten Kommunikationsverbindung zwischen der ersten FBS und dem FEG verwendet werden.

Die Anfrage-Nachricht und die Antwort-Nachricht können über eine nicht-private Kommunikationsweise kommuniziert werden, insbesondere als Rundsende-Nachrichten. Dies bedeutet, dass für andere FEG and FBS dieser Datenaustausch zwischen der ersten FBS und dem FEG lesbar sein kann.

Die Anfrage-Nachricht kann wiederholt, insbesondere periodisch, vom FEG gesendet werden. Das Senden der Anfrage-Nachricht kann gestartet werden als Reaktion auf ein Beenden des Datenaustausches zwischen dem FEG und der zweiten FBS.

Ebenfalls bereitgestellt wird ein FEG zur drahtlosen Kommunikation mit einer ersten FBS, wobei das FEG zur Anordnung im Maschinenraum wenigstens einer WZM ausgebildet ist, wobei der WZM wenigstens ein FG zugeordnet ist, für das Daten drahtlos zwischen dem FEG als einem dem FG zugeordnetem Drahtlos-Endpunkt und der ersten FBS als einem einer Steuerung der WZM zugeordneten Drahtlos-Endpunkt ausgetauscht werden sollen, wobei dem FEG ein FEG-ID und der ersten FBS ein erster FBS-ID zugeordnet ist. Das FEG ist dazu ausgebildet, das oben im Zusammenhang mit dem FEG erläuterte Verfahren auszuführen.

Ferner wird eine erste FBS zur drahtlosen Kommunikation mit einem FEG im Maschinenraum wenigstens einer WZM bereitgestellt, wobei der WZM wenigstens ein FG zugeordnet ist, für das Daten drahtlos zwischen dem FEG als einem dem FG zugeordnetem Drahtlos-Endpunkt und der ersten FBS als einem einer Steuerung der WZM zugeordneten Drahtlos-Endpunkt ausgetauscht werden sollen, wobei dem FEG ein FEG-ID und der ersten FBS ein erster FBS-ID zugeordnet ist. Die erste FBS ist dazu ausgebildet, das oben im Zusammenhang mit der ersten FBS erläuterte Verfahren auszuführen

Die erste FBS kann dazu ausgebildet sein, eine drahtlose Kommunikation gemäß einem ersten Funk-Protokoll mit wenigstens einem ersten FEG für einen auf das wenigstens eine erste FG bezogenen Datenaustausch auszuführen und eine drahtlose Kommunikation gemäß wenigstens einem zweiten Funk-Protokoll, das sich vom ersten Funk-Protokoll unterscheidet, mit wenigstens einem zweiten FEG für einen auf das wenigstens eine zweite FG bezogenen Datenaustausch auszuführen.

Ein Drahtlos-Kommunikationssystem kann das zuvor geschilderte FEG und die zuvor geschilderte erste FBS umfassen.

### Kurze Beschreibung der Zeichnungen

Weitere Einzelheiten, Vorteile und Aspekte der vorliegenden Offenbarung ergeben sich aus der nachfolgenden detaillierten Beschreibung von Ausführungsbeispielen sowie aus den Figuren. Es zeigen:
- Figuren 1A und 1B: ein erstes bzw. zweites Ausführungsbeispiel eines Kommunikationssystems;
- Figur 2: ein drittes Ausführungsbeispiel eines Kommunikationssystems mit mehreren Paletten;
- Figuren 3A und 3B: ein viertes bzw. fünftes Ausführungsbeispiel eines Kommunikationssystems mit mehreren Paletten; und
- Figur 4: ein Ausführungsbeispiel eines Signalisierungsdiagramms.

### Detaillierte Beschreibung

In der nachfolgenden detaillierten Beschreibung verschiedener Ausführungsbeispiele bezeichnen übereinstimmende Bezugszeichen die gleichen oder vergleichbare Komponenten.

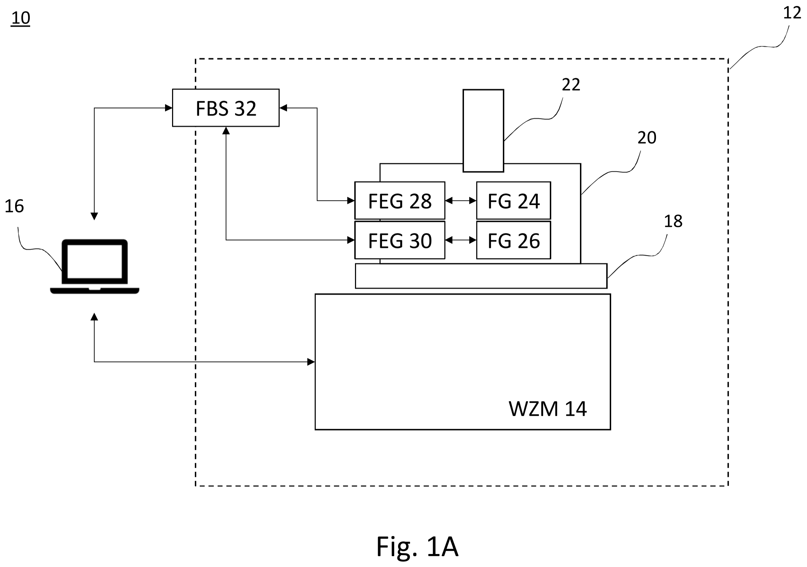

Figur 1A zeigt ein Ausführungsbeispiel eines Kommunikationssystems 10 für den Maschinenraum 12 einer Werkzeugmaschine (WZM) 14. Bei der WZM 14 kann es sich um eine Drehmaschine, eine Fräsmaschine, eine Kombinationsmaschine oder eine andere bearbeitende Maschine handeln.

Für die Ansteuerung der WZM 14 ist eine WZM-Steuerung 16 vorgesehen, die als eine numerische Steuerung (numerical control, NC, oder computerized NC, CNC) oder eine speicherprogrammierbare Steuerung (programmable logic controller, PLC) oder eine Kombination hiervon ausgebildet sein. Die WZM-Steuerung 16 ist vorzugsweise drahtgebunden, beispielweise über ein Bussystem (z.B. Ethernet) oder anderweitig (TCP/IP), mit der WZM 14 kommunikativ verbunden. Die WZM-Steuerung 16 kann in die WZM 14 integriert sein.

Der WZM 14 ist im Maschinenraum 12 eine Werkstück-Palette 18 mit einem Spannmittel 20 für ein Werkstück 22 zugeordnet. Das Spannmittel 20 wird vorzugsweise mittels fremdkraftbetätigtem Aktuator betrieben, um das Werkstück 22 während der Werkstückbearbeitung durch die WZM 14 zu fixieren. Die Palette 18 kann im Maschinenraum 12 oder an einem Rüstplatz außerhalb des Maschinenraums 12 mit dem Werkstück 22 bestückt werden.

Auf der Palette 18 und insbesondere am Spannmittel 20 sind eines oder mehrere Feldgeräte (FG) 24, 26 verbaut. Bei jedem der FG 24, 26 kann es sich um einen Sensor oder einen Aktuator handeln. Beispielhafte Sensoren umfassen optische Sensoren, taktile Sensoren, Drucksensoren und Temperatursensoren (z. B. Taster). Im Ausführungsbeispiel gemäß Figur 1A dient ein als Sensor ausgebildetes erstes FG 24 dazu, den vom Spannmittel 20 aufgebauten Spanndruck zu messen. Ein ebenfalls als Sensor ausgebildetes zweites FG 26 misst die Temperatur des Spannmittels 20 oder des Werkstücks 22. Beispielhafte Aktuatoren umfassen Elektromotoren oder Hydraulikpumpen, etwa zum Betrieb des Spannmittels 20.

Wie in Figur 1A dargestellt, ist jedem der FG 24, 26 ein Funk-Endgerät (FEG) 28, 30 zugeordnet. Die FEG 28, 30 sind ebenfalls auf der Palette 18 montiert und zur drahtlosen Kommunikation mit einer Funk-Basisstation (FBS) 32 ausgebildet. Die FBS 32 ist wiederum vorzugsweise drahtgebunden, insbesondere über ein Bussystem (z. B. gemäß dem Profinet-Standard), mit der WZM-Steuerung 16 gekoppelt. Die FEG 28, 30 bilden somit die den FG 24, 26 zugeordneten Drahtlos-Endpunkte und die FBS den komplementären, der WZM-Steuerung 16 zugeordneten Drahtlos-Endpunkt einer Kommunikationsstrecke zwischen den FG 24, 26 und der WZM-Steuerung 16.

Jedes FEG 28, 30 ist für einen auf das ihm zugeordnete FG 24, 26 bezogenen drahtlosen Datenaustausch mit der FBS 32 konfiguriert. Dieser Datenaustausch kann sich im vorliegenden Ausführungsbeispiel auf einen von dem jeweiligen FG 24, 26 abgefragten Messwert beziehen. So kann die WZM-Steuerung 16 dazu programmiert sein, eine Bearbeitung des Werkstücks 22 abzubrechen, wenn der vom FG 24 abgefragte Spanndruck des Spannmittels 20 unterhalb eines kritischen Wertes fällt oder die vom FG 26 abgefragte Temperatur des Werkstücks 22 oder des Spannmittels 20 einen kritischen Wert überschreitet. In anderen Ausführungsbeispielen kann der Datenaustausch zwischen FEG und FBS eine Ansteuerung eines als Aktuator ausgebildeten FG zum Gegenstand haben.

Allgemein kann jedes hier erläuterte FEG dazu konfiguriert sein, mit einem oder mehreren FG gekoppelt zu werden. Das FEG kann das eine oder die mehreren FG mit der erforderlichen elektrischen Leistung versorgen. In manchen Implementierungen kann das FEG nach einem Baukastenprinzip mit einem oder mehreren unterschiedlichen FG gekoppelt werden (z.B. drahtgebunden). Das FEG kann in diesem Fall eine eigenständige Komponente sein, die separat von dem einen oder den mehreren FG handhabbar ist. In anderen Implementierungen können das FEG und eines oder mehrere FG zu einer einzigen Komponente integriert sein. Ferner können ein oder mehrere FEG und ein oder mehrere zugeordnete FG zusätzlich oder alternativ der WZM 14 zugeordnet und/oder an der WZM 14 verbaut sein.

Die beiden FEG 28, 30 gemäß dem Ausführungsbeispiel gemäß Figur 1A sind zur drahtlosen Kommunikation, insbesondere zum drahtlosen Datenaustausch, gemäß unterschiedlichen Funk-Protokollen eingerichtet. So ist das dem FG 24 zugeordnete FEG 28 zur drahtlosen Kommunikation mit der FBS 32 gemäß einem ersten Funk-Protokoll für den auf das FG 24 bezogenen Datenaustausch eingerichtet. Das dem FG 26 zugeordnete FEG 30 ist hingegen eingerichtet zur drahtlosen Kommunikation mit der FBS 32 gemäß wenigstens einem zweiten Funk-Protokoll für den auf das FG 26 bezogenen Datenaustausch, wobei sich das zweite Funk-Protokoll von dem ersten Funk-Protokoll unterscheidet. Um mit beiden FEG 28, 30 kommunizieren zu können, ist die FBS 32 zur drahtlosen Kommunikation gemäß dem ersten Funk-Protokoll und gemäß dem wenigstens einen zweiten Funk-Protokoll eingerichtet. In manchen Implementierungen unterstützt die FBS 32 drei oder mehr unterschiedliche Funk-Protokolle.

Das erste Funk-Protokoll und das wenigstens eine zweite Funk-Protokoll können im 2,4 GHz-Frequenzband arbeiten. Das erste Funk-Protokoll und das wenigstens eine zweite Funk-Protokoll können ausausgewählt sein aus Bluetooth, insbesondere Bluetooth Low Energy oder Bluetooth Mesh, IO-Link Wireless, Chirp, Matter, Thread, LoRaWAN, UWB, NFC, Wireless-Profinet, ZigBee, RFID, WLAN, einem ersten proprietären Funk-Protokoll und einem zweiten proprietären Funkprotokoll. Jedem Funk-Protokoll kann ein dedizierter Protokoll-Stack zugeordnet sein, der von den FEG 28, 30 und der FBS 32 implementiert wird.

Gemäß einer Variante umfasst die FBS 32 eine als Software-Defined Radio (SDR) konfigurierte Funk-Schnittstelle, die das erste Funk-Protokoll und das wenigstens eine zweite Funk-Protokoll unterstützt. Gemäß einer zweiten Variante umfasst die FBS 32 eine als erste Hardware ausgeführte erste Funk-Schnittstelle, die das erste Funk-Protokoll unterstützt, und wenigstens eine als zweite Hardware ausgeführte zweite Funk-Schnittstelle, die das wenigstens eine zweite Funk-Protokoll unterstützt. Beide Varianten sind kombinierbar. Dies bedeutet, dass die FBS 32 sowohl eine als SDR konfigurierte Funk-Schnittstelle als auch eine oder mehrere als separate Hardware ausgeführte Funk-Schnittstellen umfassen kann.

Durch das FBS-seitige Unterstützen mehrerer Funk-Protokolle wird die Kompatibilität der Drahtlos-Kommunikation zwischen den FEG 28, 30 und der FBS 32 über verschiedene Hersteller, Baureihen oder Modellgenerationen hinweg gewährleistet, etwa wenn die FEG 28, 30 (und ggf. die zugeordneten FG 24, 26) von unterschiedlichen Herstellern stammen und unterschiedliche Funk-Protokolle implementieren. Auch kann über Baureihen oder Modellserien eines bestimmten Herstellers hinweg eine Änderung des Funk-Protokolls unter Gewährleistung der Kompatibilität der Drahtlos-Kommunikation stattfinden.

Eine Auswahl eines bestimmten Funk-Protokolls durch die FBS 32 zur Kommunikation mit einem bestimmten FEG 28, 30 kann durch eine Funk-Protokoll-Steuerung (FPS) erfolgen. Die FPS kann zumindest teilweise oder vollständig in der FBS implementiert sein. Die FPS kann die Funk-Protokoll-Auswahl basierend auf einem Steuersignal der Steuerung 16 treffen. Die Auswahl kann von der Art des FEG 28, 30 und/oder des FG 24, 26 abhängen. So kann ein erstes Funk-Protokoll wie Chirp zur Kommunikation mit einem Spindeltaster und ein davon verschiedenes zweites Funk-Protokoll wie Bluetooth Low Energy zur Kommunikation mit einem Spannmittel zum Einsatz gelangen.

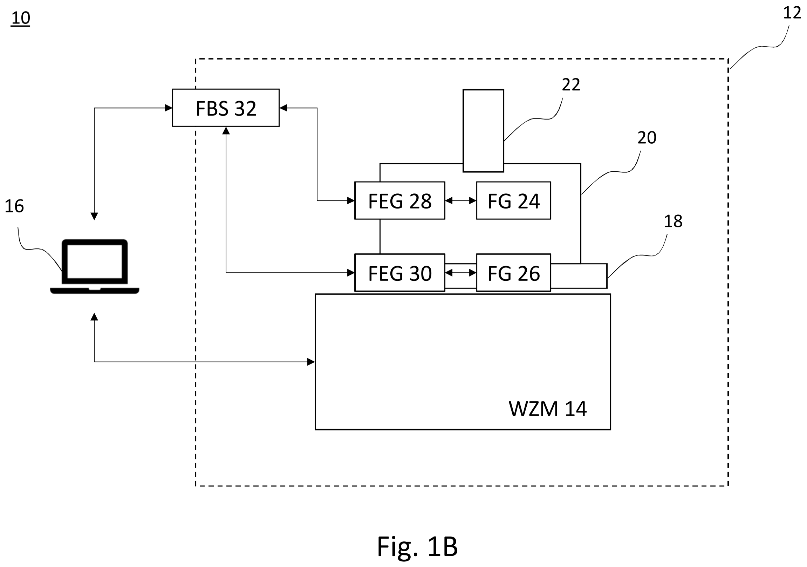

Im Ausführungsbeispiel gemäß Figur 1A sind die beiden FEG 28, 30 am Spannmittel 20 und auf der gleichen Palette 18 verbaut. Im Ausführungsbeispiel gemäß Fig. 1B ist das FEG 28 dem beispielweise als Messtaster ausgeführten FG 24 zugeordnet, welches in regelmäßiger Kommunikation mit der FBS 32 steht, während FEG das FEG 30 der Palette 18 zugeordnet ist, welcher wiederum das FG 26 zugeordnet ist.

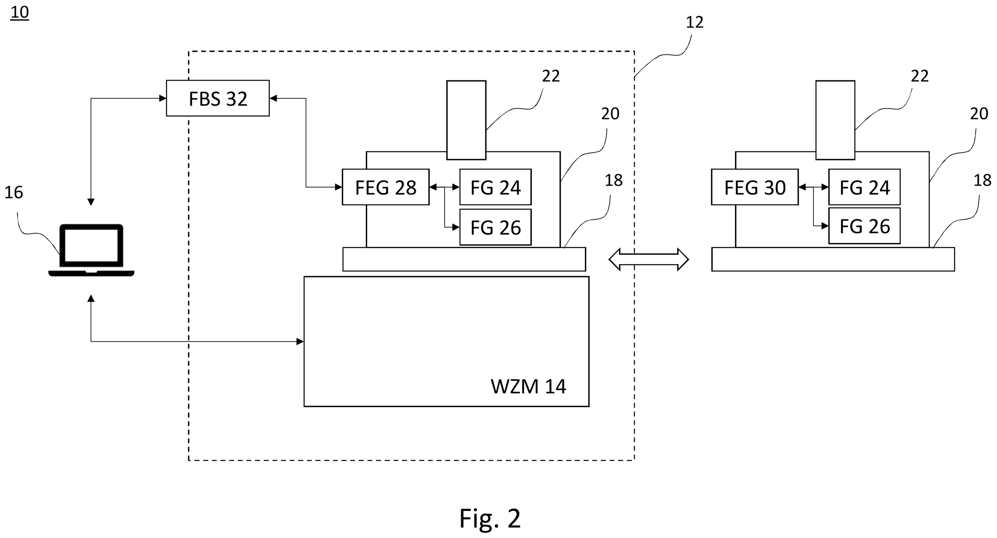

Gemäß dem Ausführungsbeispiel von Figur 2 ist nur das erste FEG 28 auf einer ersten Palette 18 verbaut und dazu eingerichtet, mit beiden lokalen FG 24, 26 zu kommunizieren, während nur das zweite FEG 30 auf einer zweiten Palette 18 verbaut und dazu eingerichtet ist, mit beiden lokalen FG 24, 26 zu kommunizieren. In diesem Szenario kann pro Palette 18 auch eines der beiden FG 24, 26 entfallen oder durch ein drittes FG ersetzt werden.

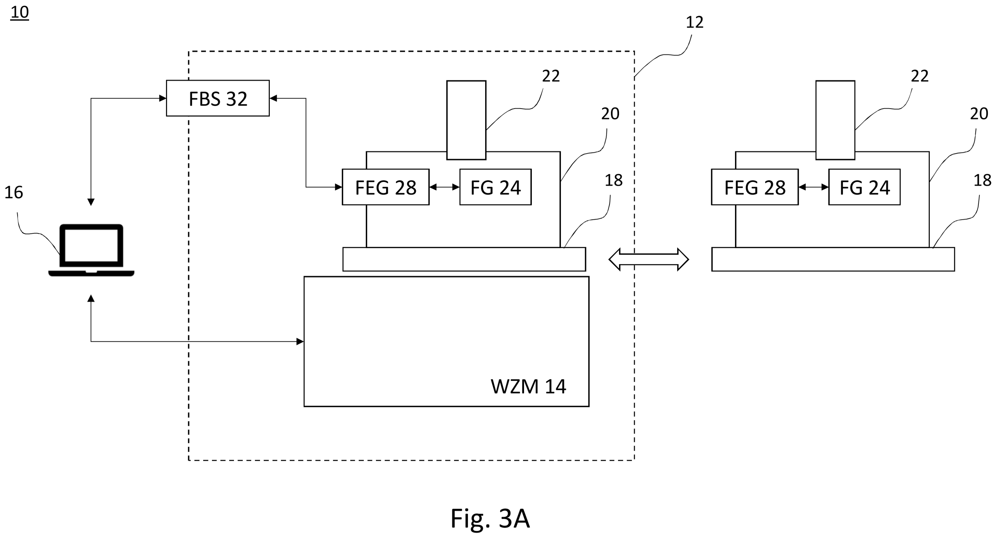

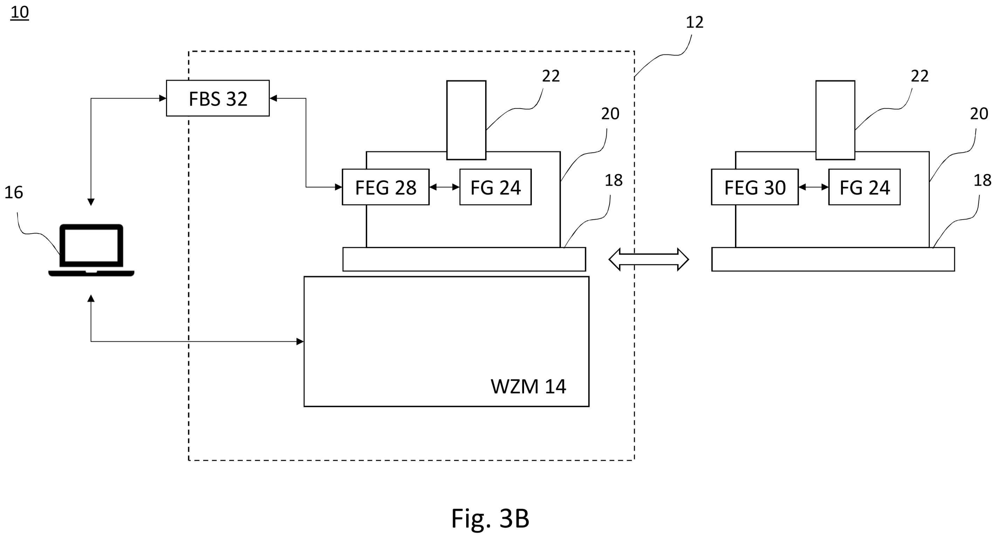

Weitere Ausführungsbeispiele sind in den Figuren 2, 3A und 3B gezeigt. Die zwei (oder mehr) Paletten 18 gemäß Figur 2, Figur 3A und Figur 3B werden nacheinander der WZM 14 zur Werkstückbearbeitung zugeführt. Auch kann eine bestimmte Palette 18 nacheinander verschiedenen WZM 14 zur Werkstückbearbeitung zugeführt werden. Allgemein kann zwischen der Anzahl n der Paletten 18 und der Anzahl m der WZM 14 eine n:m Beziehung bestehen, z.B. im Verhältnis 1:1, n:1 mit n>1, 1:m mit m>1 oder n:m mit n>1 und m>1.

Wie zuvor erläutert, zielen die Implementierungen der Figuren 1A bis 3 auf einen drahtlosen Datenaustausch zwischen den FEG 28, 30 und der FBS 32 ab, der auf die FG 24, 26 gerichtet ist. Bevor dieser auf die FG 24, 26 gerichtete Datenaustausch stattfinden kann, muss die FBS 32 über Konfigurationsinformationen für das jeweilige FEG 28, 30 verfügen. Diese FEG-Konfigurationsinformationen können von der FBS 32 benötigt werden, um eine drahtlose Kommunikation mit dem jeweiligen FEG 28, 30 durchführen zu können. Die FEG-Konfigurationsinformationen können sich auf Einstellungen der Funk-Schnittstellen der FEG 28, 30 beziehen. Ohne Beschränkung der Allgemeinheit können die FEG-Konfigurationsinformationen einen oder mehrere der folgenden Parameter enthalten:
- eine oder mehrere von dem jeweiligen FEG 28, 30 unterstützte oder aktuell eingestellte Funkfrequenzen oder Funkfrequenzbereiche für den Datenaustausch,
- eines oder mehrere von dem jeweiligen FEG 28, 30 unterstützte oder aktuell eingestellte Funk-Protokolle,
- eine oder mehrere von dem jeweiligen FEG 28, 30 unterstützte oder aktuell eingestellte Sendungswiederholungsstrategien, und
- einen Identifikator (FEG-ID) des jeweiligen FEG 28, 30

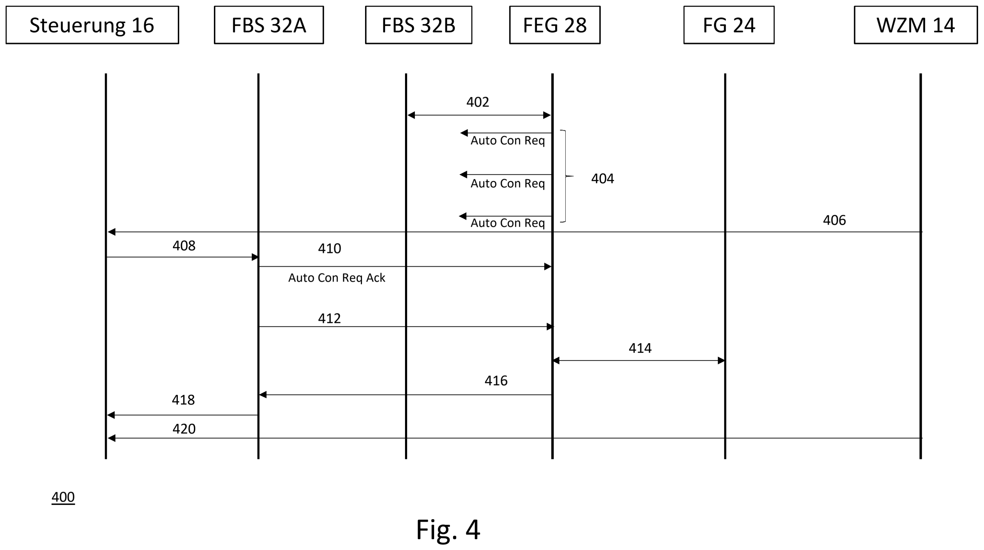

Die FEG-Konfigurationsinformationen eines bestimmten FEG 28, 32 werden der FBS 32 bei einer Einrichtung des Kommunikationssystem 10 herkömmlicherweise vollständig mitgeteilt (was auch als "Pairing", oder "Anlernen", bezeichnet wird). Diese Vorgehensweise ist dann effizient, wenn jeder WZM 14 eine Palette 18 mit wenigstens einem dort verbauten FEG 28, 30 fest zugeordnet ist, wie in Figur 1A gezeigt, wenn also eine zeitlich fortdauernde 1:1 Beziehung zwischen der WZM 14 und der Palette 18 bzw. den FEG 28, 30 besteht. Anders verhält es sich in Szenarien, in denen eine n:m Beziehung besteht, mit n>1 und/oder m>1. In diesen Szenarien kommt es fortlaufend zu einer dynamischen Neuzuordnung zwischen den WZM 14 und den Paletten 18. Dann muss die WZM-Steuerung 16 aber z.B. auch fortlaufend neu unterrichtet werden, welche Palette 18 (und welches FEG 28, 30 und damit FG 24, 26) einer bestimmte WZM 14 gerade zugeordnet ist. In solchen Szenarien scheidet ein manuelles Pairing in der Regel aus, und ein automatisiertes Pairing ist mit einem hohen Signalisierungsaufwand verbunden. Zur Verringerung des Signalisierungsaufwands wird die im Signalisierungsdiagramm 400 der Figur 4 veranschaulichte Signalisierungsstrategie vorgeschlagen. Diese Signalisierungsstrategie ist insbesondere für die Szenarien der Figuren 3 und 4 angedacht.

Das Signalisierungsdiagramm 400 der Figur 4 basiert auf der Annahme, dass das Kommunikationssystem 10 zwei separate FBS 32A, 32B mit einem jeweils fest zugeordneten Identifikator (FBS-ID) umfasst. Bei den beiden FBS-ID kann es sich um Seriennummern der FBS 32A, 32B handeln oder um eine jedem der FBS 32A, 32B fest zugeordnete Zufallszahl. Die beiden FBS 32A, 32B können beispielsweise verschiedenen WZM 14 und damit verschiedenen Maschinenräumen 12 zugeordnet sein. Auch können mehrere WZM 14 räumlich gruppiert und jeder WZM-Gruppe eine separate FBS 32 zugeordnet werden.

Es wird ferner angenommen, dass das FEG 28 (ohne Beschränkung der Allgemeinheit; es kann sich hier auch um das FEG 30 oder beide FEG 28, 30 handeln) zuvor mit der FBS 32B in Kommunikation stand, beispielsweise für einen auf das FG 24 bezogenen Datenaustausch. Dieser Sachverhalt ist in Figur 4 durch den Signalisierungsschritt 402 veranschaulicht. Aufgrund der vorhergehenden Kommunikation mit der FBS 32B kennt das FEG 28 den FBS-ID der FBS 32B. Allgemein kann das FEG 28 und jedes weitere FEG 30 FBS-Konfigurationsinformationen wie die FBS-ID und ggf. von der jeweiligen FBS 32 unterstützte Funktionalitäten temporär abspeichern und bei der Kommunikation mit einer neuen FBS 32 aktualisieren. Die Kommunikation mit der FBS 32B wurde zu einem bestimmten Zeitpunkt beendet, beispielweise weil die Palette 18 mit dem FEG 28 von einer der FBS 32B zugeordneten WZM 14 zu einer anderen WZM 14 transportiert wurde, der die FBS 32A zugeordnet ist.

Nach der Beendigung der Kommunikationsverbindung mit der FBS 32B zeigt das FEG 28 fortlaufend seine Kommunikationsbereitschaft an. Zu diesem Zweck sendet das FEG 28 insbesondere periodisch (z.B. alle 100 ms bis 2d) Anfrage-Nachrichten für eine neuerliche und automatisiert aufgebaute Kommunikationsverbindung, wie in den Signalisierungsschritten 404 veranschaulicht ("Auto Con Req"). Diese Anfrage-Nachrichten können auf nicht-private Weise, also unter der Annahme keiner bestimmten FEG/FBS-Zuordnung gesendet werden (z.B. als Rundsende-Nachrichten, die von allen FBS 32 gelesen werden können). Die in den Signalisierungsschritten 404 gesendete Anfrage-Nachricht enthält den FBS-ID der FBS 32B, mit der das FEG 28 zuletzt auf das FG 24 bezogenen Daten ausgetauscht hat. Ferner enthält die Anfrage-Nachricht den FEG-ID des FEG 28. In manchen Implementierungen kann die Anfrage-Nachricht gemäß Signalisierungsschritt 404 vom FEG 28 alternierend zu einer anderen Anfrage-Nachricht gesendet werden, die auf einen "regulären" Verbindungsaufbau (d.h. mit obligatorischem Austausch der FEG-Konfigurationsinformationen) gerichtet ist. Die FBS 32 kann dann wahlweise auf die Anfrage-Nachricht gemäß Signalisierungsschritt 404 antworten und einen nachfolgenden Austausch der FEG-Konfigurationsinformationen für obsolet erklären, oder auf die alternative Anfrage-Nachricht, was den obligatorischen Austausch der FEG-Konfigurationsinformationen.

In manchen Szenarien enthält die Anfrage-Nachricht ferner - als optionalen Inhalt - einen Informations-Indikator, welcher einem von der FEG 28 aktuell eingestellten Satz von FEG-Konfigurationsinformationen zugeordnet ist. Der Informations-Identifikator kann ein aus dem aktuell eingestellten Satz von FEG-Konfigurationsinformationen abgeleiteter Code sein, beispielsweise ein Hash-Code. Lassen sich die FEG-Konfigurationsinformationen beispielsweise als eine sortierte Abfolge von Zahlen darstellen, kann die Quersumme dieser Zahlen als Hash-Code dienen. Verschiedenen Sätzen von FEG-Konfigurationsinformationen sind dann auch (in der Regel bzw. bei geeigneter Festlegung der Zahlen immer) verschiedene Quersummen und damit verschiedene Informations-Identifikatoren zugeordnet.

In dem Signalisierungsszenario der Fig. 4 will nun die FBS 32A mit dem FEG 28 einen auf das FG 24 bezogenen Datenaustausch neu beginnen. Beispielsweise kann sich die Palette 18 mit dem FEG 28 aus dem Empfangsbereich der FBS 32B heraus zu einer neuen WZM 14 bewegt haben, der die FBS 32A zugeordnet ist. Die WZM 14 kann in diesem Zusammenhang dann den FEG-ID der FEG 28 ausgelesen und an die Steuerung 16 der WZM 14 kommunizieren, siehe Signalisierungsschritt 406. Beispielsweise kann bei einer festen Zuordnung der FEG 28 zu einer bestimmte Palette 18 der FEG-ID als Paletten-Identifikator dienen und auf die Palette 18 als Bar-Code oder QR-Code aufgedruckt oder in einem Speicher der Palette 18 hinterlegt werden. Die WZM 14 kann bei logischer Kopplung mit der Palette 18 den Paletten-Identifikator (also den FEG-ID) dann auslesen (z.B. über eine RFID- oder NFC-Verbindung oder entsprechende elektrische Kontakte) und an die Steuerung 16 kommunizieren.

In Signalisierungsschritt 408 teilt die Steuerung 16 der FBS 32A mit, dass eine Drahtlos-Kommunikation mit dem FEG 28 gewünscht ist. In diesem Zusammenhang sendet die Steuerung 16 den von der WZM 14 erhaltenen FEG-ID an die FBS 32A. Diesen FEG-ID hatte die FBS 32A bereits zuvor direkt von dem FEG 28 erhalten (s. Signalisierungsschritt 404). Da der von der Steuerung 16 erhaltene FEG-ID mit dem in der Anfrage-Nachricht ("Auto Con Req") von dem FEG 28 erhaltenen FEG-ID übereinstimmt, stellt die FBS 32A fest, dass ein auf das der FEG 28 zugeordnete FG 24 bezogener drahtloser Datenaustausch mit der FEG 28 gewünscht ist. Sollten auf einer Palette 18 mehrere FEG 28, 30 angeordnet sein (vgl. Figuren 1A, 1B und Figur 2), so kann die Steuerung 16 der FBS 32A mehrere jeweils zugeordnete FEG-ID mitteilen, so dass die nachfolgend erläuterten Prozesse parallel für mehrere FEG 28, 30 durchgeführt werden. Zusätzlich oder alternativ dazu kann die Steuerung 16 dem jeweiligen FEG-ID zugeordnete ergänzende Informationen abgespeichert haben, z.B. über die Art und/oder Anzahl der einer FEG 28, 30 zugeordneten FG 24, 26 und/oder das von einem bestimmten FEG 28, 30 unterstützte Funk-Protokoll. Diese Informationen können dann zusammen mit dem FEG-ID der FBS 32A mitgeteilt werden, so dass eine FPS der FBS 32A dann z.B. gleich das richtige Funk-Protokoll für die Kommunikation mit einem bestimmten FEG 28, 30 aktivieren kann.

In einem nächsten Schritt überprüft die FBS 32A, ob es auf FEG-Konfigurationsinformationen Zugriff hat, die dem FEG-ID des FEG 28 (und damit dem FEG 28) zugeordnet sind. Beispielsweise können die FBS 32 so konfiguriert sein, dass sie alle erhaltenen FEG-Konfigurationsinformationen zumindest temporär lokal abspeichern. So kann bei erneutem Kommunikationsbedarf mit einem FEG (z.B. bei Fortsetzung der zuvor beendeten Kommunikation mit dem FEG 28) unmittelbar darauf zugegriffen werden, ohne sie vorher separat (z.B. erneut vom FEG 28) anfordern zu müssen. Diese Vorgehensweise reduziert den Signalisierungsaufwand.

Sofern mit jedem FEG - wie dem FEG 28 - ein fester Satz an FEG-Konfigurationsinformationen verknüpft ist, reicht die Signalisierung des FEG-ID an die FBS 32A aus, um diese FEG-Konfigurationsinformationen lokal wieder abrufen zu können. Sollte ein FEG - wie das FEG 28 - mehrere unterschiedliche Sätze an FEG-Konfigurationsinformationen einstellen können, reicht die Signalisierung des FEG-ID an die FBS 32A nicht mehr aus, damit die FBS 32A die aktuell verwendeten FEG-Konfigurationsinformationen eindeutig identifizieren kann. In diesem Fall wird von der FEG 28 in Signalisierungsschritt 404 - wie vorstehend erläutert - zusätzlich zum FEG-ID der Informations-Identifikator gesendet, der den aktuell verwendeten FEG-Konfigurationsinformationen zugeordnet ist (z.B. ein daraus gewonnener Hash-Code). Des Weiteren legt jede FBS 32 einen bestimmten Satz von FEG-Konfigurationsinformationen verknüpft mit der FEG-ID und dem zugeordneten Identifikations-Identifikator ab. Letzterer kann von jeder FBS 32 selbst berechnet werden oder als Teil der FEG-Konfigurationsinformationen vom FEG 28 erhalten werden.

Falls der Identifikations-Identifikator aus den FEG-Konfigurationsinformationen gewonnen wird und der FEG-ID einen Teil der FEG-Konfigurationsinformationen bildet, kann der FEG-ID auch mittels des Identifikations-Indikators - jedenfalls in kodierter Form - signalisiert werden. Gemäß der vorliegenden Offenbarung kann der FEG-ID daher auch in einer dermaßen kodierten Form in der Anfrage-Nachricht enthalten sein.

Basierend auf dem vom FEG 28 erhaltenen FEG-ID und, optional, dem ebenfalls vom FEG 28 erhaltenen Identifikations-Identifikator kann die FBS 32 überprüfen (z.B. unter Verwendung einer Nachschlagetabelle), ob es Zugriff auf die FEG-Konfigurationsinformationen besitzt, die für den von der Steuerung 16 angeforderten Datenaustausch mit dem FEG 28 erforderlich sind. Die FBS 32A antwortet sodann auf die Anfrage-Nachricht des FEG 28 mit einer Antwort-Nachricht in Signalisierungsschritt 410 ("Auto Con Req Ack"). Die Antwort-Nachricht zeigt dem FEG 28 an, dass die FBS 32A einen auf das FG 24 bezogenen Datenaustausch mit dem FEG 28 anfragt. Dies ergibt sich für das FEG 28 beispielsweise aus dem verwendeten Nachrichtentyp ("Auto Con Req Ack").

Die Antwort-Nachricht zeigt dem FEG 28 ferner an, ob die FBS 32A über die für den Datenaustausch erforderlichen FEG-Konfigurationsinformationen verfügt. Dieser Hinweis kann über ein in der Antwort-Nachricht enthaltenes Informationselement (z.B. ein Flag "Ja"/"Nein") erfolgen. Zusätzlich oder alternativ dazu kann die Antwort-Nachricht den FDS-ID der FBS 32 enthalten. In einer weiteren Implementierung enthält die Antwort-Nachricht ein zweites Informationselement (z.B. ein weiteres Flag "Ja"/"Nein"), das dem FEG 28 anzeigt, dass die FBS 32A den Austausch der FEG-Konfigurationsinformationen ausdrücklich anfordert. In solchen Fällen und anderen Fällen kann die zur Anfrage-Nachricht gemäß Signalisierungsschritt 404 vom FEG 28 alternierend gesendete, optionale Anfrage-Nachricht, die auf einen "regulären" Verbindungsaufbau (d.h. mit obligatorischem Austausch der FEG-Konfigurationsinformationen) gerichtet ist, entfallen.

Gemäß einer ersten Fall-Konstellation zeigt die Antwort-Nachricht dem FEG 28 an, dass die FBS 32A die für den Datenaustausch mit dem FEG 28 erforderlichen FEG-Konfigurationsinformationen benötigt. Konkret fehlen der FBS 32A beispielsweise Parameter darüber, wie die Funkschnittstelle des FEG 28 aktuell konfiguriert ist (z.B. bezüglich eines aktuell verwendeten Frequenzbereichs und/oder eines aktuell verwendeten Funk-Protokolls). In diesem Fall erfolgt ein automatisches drahtloses Senden der FEG-Konfigurationsinformationen vom FEG 28 an die FBS 32A vor einem Austausch der auf das FG 24 bezogenen Daten zwischen dem FEG 28 und der FBS 32A (in Figur 4 nicht dargestellt). Die in Signalisierungsschritt 410 gesendete Antwort-Nachricht enthält in diesem Fall wenigstens ein Informationselement, beispielsweise wenigstens ein Flag, das dem FEG 28 anzeigt, dass die FBS 32A die für den Datenaustausch mit dem FEG 28 erforderlichen FEG-Konfigurationsinformationen erst noch benötigt. Sobald die FBS 32A dem FEG 28 in der Antwort-Nachricht signalisiert, dass es die für den Datenaustausch mit dem FEG 28 erforderlichen FEG-Konfigurationsinformationen benötigt, kann die weitere Kommunikation zwischen diesen beiden Komponenten über eine private Kommunikationsverbindung (z.B. über eine Unicast-Verbindung) erfolgen, beispielsweise unter Verwendung des FBS-ID der FBS 32A als "Sync Word" (hierzu unten mehr).

Auf den Erhalt dieses Hinweises, dass die FBS 32A die für den Datenaustausch mit dem FEG 28 erforderlichen FEG-Konfigurationsinformationen benötigt, kann das FEG 28 der FBS 32A seine Konfigurationsinformationen (vgl. die oben aufgeführten Parameter) senden. Die FBS 32A kann auf den Erhalt der FEG-Konfigurationsinformationen mit dem Senden ihrer FBS-Konfigurationsinformationen an das FEG 28 antworten. Ferner können das FEG 28 und die FBS 32A spezifische Konfigurationsinformationen betreffend Drittgeräte austauschen (z.B. über Einstellungen der Spannmittel 20 oder der FG 24, 26). Sobald dieser Informationsaustausch abgeschlossen ist, kann die FBS 32A dem FEG 28 eine entsprechende Bestätigungsnachricht senden. Ab diesem Zeitpunkt kann der auf das FG 24 bezogene Datenaustausch beginnen. Die von der FEG 28 erhaltenen FEG-Konfigurationsinformationen (möglicherweise einschließlich des Konfigurations-Identifikators) werden von der FBS 32A lokal oder in einem externen Speicher (z.B. in einer Datenbank auf einem von der FBS 32A separaten Schnittstellengerät hin zur Steuerung 16), auf welchen die FBS 32A Zugriff hat, abgespeichert und müssen zukünftig nicht neu angefordert werden.

Gemäß einer zweiten Fall-Konstellation zeigt die Antwort-Nachricht dem FEG 28 an, dass die FBS 32A über die für den Datenaustausch mit dem FEG 28 erforderlichen FEG-Konfigurationsinformationen verfügt (z.B. über das oben angesprochene Informationselement). In diesem Fall kann ein drahtloser Austausch der auf das FG 24 bezogenen Daten zwischen dem FEG 28 und der FBS 32A stattfinden, ohne dass ein vorheriges (erneutes) Senden der FEG-Konfigurationsinformationen vom FEG 28 an die FBS 32A erforderlich wäre. In einer Implementierung enthält die Antwort-Nachricht in diesem Fall auch den FBS-ID der FBS 32A. Der auf diese Weise erhaltende FBS-ID der FBS 32A kann von der FEG 28 dazu verwendet werden, den zuvor abgespeicherten FBS-ID der FBS 32B (wie er in Anfrage-Nachricht gesendet wurde) zu aktualisieren. So kennt das FEG 28 den FBS-ID der FBS 32A auch noch nach Beendigung einer aktuellen Kommunikationssitzung mit der FBS 32A und kann deren FBS-ID in der nachfolgend gesendeten Anfrage-Nachricht senden (vgl. Signalisierungsschritt 404).

Sobald die FBS 32A dem FEG 28 in der Antwort-Nachricht signalisiert, dass es über die für den Datenaustausch mit dem FEG 28 erforderlichen FEG-Konfigurationsinformationen verfügt, kann die weitere Kommunikation zwischen diesen beiden Komponenten, insbesondere der drahtlose Austausch der auf das FG 24 bezogenen Daten, über eine private Kommunikationsverbindung (z.B. über eine Unicast-Verbindung) erfolgen. Diese private Kommunikationsverbindung kann so konfiguriert werden, dass sie von anderen Komponenten des Kommunikationssystems 10 (z.B. der FBS 32B oder dem FEG 30) nicht gelesen werden kann oder muss. Beispielsweise kann ein der FBS 32A und dem FEG 28 gemeinsam bekannter Parameter (wie der FBS-ID der FBS 32A) zum Verschlüsseln oder Verwürfeln der weiteren Kommunikation verwendet werden oder als eindeutiger Bezeichner ("Sync Word") in z.B. einem Header jeder ausgetauschten Nachrichten dienen. Zusätzlich oder alternativ hierzu kann gewährleistet werden, dass die FBS 32A und das FEG 28 auf einer nur diesen beiden Komponenten zugewiesenen Frequenz (oder einem nur diesen beiden Komponenten zugewiesenen Frequenzbereich) senden.

In Rahmen der nachfolgenden privaten Kommunikation kann die FBS 32A in einem weiteren Signalisierungsschritt 412 dem FEG 28 eine auf die Abfrage des FG 24, also des Drucksensors, gerichtete Anfrage-Nachricht senden. Das FEG 28 Signalisierungsschritt 412 fordert in einem Signalisierungsschritt 412 den aktuellen Messwert des FG 24 and und leitet diesen in Signalisierungsschritt 416 and die FBS 32A weiter. Die FBS 32A wiederum gibt den Messwert an die Steuerung 16 aus. Die Steuerung 16 führt basierend auf dem Messwert eine Schwellenwert-Entscheidung durch. Sollte es sich hierbei herausstellen, dass der Messwert unterhalb des Schwellenwerts liegt, deutet dies auf einen unzureichenden Spanndruck hin. Die Steuerung 16 schaltet hierauf in Signalisierungsschritt 420 die WZM 14 aus Sicherheitsgründen ab (oder gar nicht erst an, so dass der Signalisierungsschritt 420 entfällt). Auch vorstellbar ist, dass das FEG 28 selbst dazu konfiguriert ist die Messwerte des FG 24 zu überwachen und nur bei Unter- oder Überschreiten eines Schwellenwerts ein Signal in Form eines Fehlertelegramms über die FBS 32A hin zur Steuerung 16 zu senden.

Wie im Zusammenhang mit den Figuren 1A und 1B erläutert, kann mit jeder FEG 28, 30 (und dem entsprechenden FEG-ID) ein bestimmtes Funk-Protokoll verknüpft sein, das von dem entsprechen FEG 28, 30 unterstützt ist. In bestimmten Fällen, insbesondere wenn pro Palette 18 nur ein FEG verbaut ist, kann es vorkommen, dass die auf verschiedenen Paletten 18 verbauten FEG verschiedene Funk-Protokolle implementieren (vgl. Figur 3B). In solchen Fällen kann die FBS 32A von Figur 4 (z.B. eine darin integrierte FPS) konfiguriert sein, basierend auf dem von der WZM-Steuerung 16 erhaltenen FEG-ID (vgl. Signalisierungsschritt 408) situationsbedingt das erste oder das zweite Funk-Protokoll für die Drahtlos-Kommunikation mit dem der FEG-ID zugeordneten FEG 28, 30 auszuwählen. Das mit einem bestimmten FEG 28, 30 verknüpfte Funk-Protokoll kann in den FEG-Konfigurationsinformationen des FEG 28, 30 hinterlegt sein. Gemäß einem anderen Fall kann die WZM 14 die Palette 18 "auslesen" (z.B. über NFC oder RFID) und so die FEG-ID des der Palette 18 zugeordneten FEG 28, 30 und/oder gleich das diesem FEG 28, 30 zugeordnete Funk-Protokoll ermitteln. Diese Informationen können dann an die Steuerung 16 gesendet werden, welche sie an die FBS 32A weiterleitet (vgl. Signalisierungsschritte 406 und 408). Auch ein manuelles oder anderweitiges Zugänglichmachen dieser Information für eine FBS 32 ist denkbar.

Wie sich aus der Beschreibung der Ausführungsbeispiele ergibt, wird ein Kommunikationssystem 10 angegeben, das mehrere Funk-Protokolle parallel unterstützt. Damit wird die Kompatibilität des Funksystems 10 erhöht. Ferner kann das FBS/FEG-Pairing automatisiert und mit einem geringen Signalisierungsaufwand störungssicher durchgeführt werden, gerade wenn mehreren WZM 14 mehrere Werkstück-Paletten 18 zur dynamischen Werkstückbearbeitung gegenüberstehen.

Zusammengefasst wird mehreren FG 24, 26, denen jeweils ein FEG 28, 30 zugeordnet ist, gemäß Aspekten der vorliegenden Offenbarung eine verbesserte Fähigkeit zur Verbindung mit einer einer WZM 14 zugeordneten FBS 32 ermöglicht. Die FBS 32 wird in die Lage versetzt zur Kommunikation mit mehr als einem FG 24, 26 mit wenigstens einem zugeordneten FEG 28, 30. Gemäß Aspekten der vorliegenden Offenbarung kann der manuelle Aufwand eines Verbindungsvorgangs auf ein Minimum reduziert oder gar vermieden werden. Gemäß Aspekten der vorliegenden Offenbarung wird eine flexible Zuordnung von mehr als einem FG 24, 26 zu einer WZM 14 ermöglicht.

Die folgenden nummerierten Ausführungsbeispiele bilden ebenfalls einen Teil der vorliegenden Offenbarung und können mit den oben genannten Ausführungsbeispielen kombiniert werden, beispielsweise in Systemen. Die Bezugszeichen in den Ausführungsbeispielen dienen nur der Veranschaulichung und sind nicht einschränkend zu verstehen.
1. Drahtlos-Kommunikationssystem (10) für einen Maschinenraum (12) wenigstens einer Werkzeugmaschine, WZM (14), das System umfassend:
   eine Funk-Basisstation, FBS (32), die eingerichtet ist zur drahtlosen Kommunikation gemäß einem ersten Funk-Protokoll und wenigstens einem zweiten Funk-Protokoll, das sich vom ersten Funk-Protokoll unterscheidet;
   wenigstens ein im Maschinenraum betreibbares erstes Feldgerät, FG (24);
   wenigstens ein im Maschinenraum betreibbares zweites FG (26);
   ein dem wenigstens einen ersten FG zugeordnetes erstes Funk-Endgerät, FEG (28), das eingerichtet ist zur drahtlosen Kommunikation mit der FBS gemäß dem ersten Funk-Protokoll für einen auf das wenigstens eine erste FG bezogenen Datenaustausch; und
   ein dem wenigstens einen zweiten FG zugeordnetes zweites FEG (30), das eingerichtet zur drahtlosen Kommunikation mit der FBS gemäß dem wenigstens einen zweiten Funk-Protokoll für einen auf das wenigstens eine zweite FG bezogenen Datenaustausch.
2. Drahtlos-Kommunikationssystem gemäß Ausführungsbeispiel 1, wobei
   die FBS eine als Software-Defined Radio, SDR, konfigurierte Funk-Schnittstelle umfasst, die das erste Funk-Protokoll sowie das wenigstens eine zweite Funk-Protokoll unterstützt.
3. Drahtlos-Kommunikationssystem gemäß Ausführungsbeispiel 1, wobei
   die FBS eine als erste Hardware ausgeführte erste Funk-Schnittstelle umfasst, die das erste Funk-Protokoll unterstützt, und wenigstens eine als zweite Hardware ausgeführten zweite Funk-Schnittstelle umfasst, die das wenigstens eine zweite Funk-Protokoll unterstützt.
4. Drahtlos-Kommunikationssystem gemäß einem der vorhergehenden Ausführungsbeispiele, wobei
   das wenigstens eine erste FG wenigstens einen ersten Sensor und/oder wenigstens einen ersten Aktuator umfasst; und/oder
   das wenigstens eine zweite FG wenigstens einen zweiten Sensor und/oder wenigstens einen zweiten Aktuator umfasst.
5. Drahtlos-Kommunikationssystem gemäß einem der vorhergehenden Ausführungsbeispiele, wobei
   das erste und/oder zweite FEG eine eigenständige Komponente ist, die separat von dem wenigstens einen ersten und/oder zweiten FG handhabbar ist.
6. Drahtlos-Kommunikationssystem gemäß einem der vorhergehenden Ausführungsbeispiele, ferner umfassend
   eine WZM-Steuerung (16) für die wenigstens eine WZM, wobei der wenigstens einen WZM das erste und das zweite FG zugeordnet sind und wobei das System eingerichtet ist, Daten drahtlos zwischen dem ersten und zweiten FEG als jeweils einem dem ersten bzw. zweiten FG zugeordnetem Drahtlos-Endpunkt und der FBS als einem der WZM-Steuerung zugeordneten Drahtlos-Endpunkt auszutauschen.
7. Drahtlos-Kommunikationssystem gemäß einem der vorhergehenden Ausführungsbeispiele, wobei
   das erste FEG und/oder das zweite FEG gemäß Anspruch 1 konfiguriert ist.
8. Drahtlos-Kommunikationssystem gemäß einem der vorhergehenden Ausführungsbeispiele, wobei
   die FBS gemäß Anspruch 2 konfiguriert ist.
9. Verfahren zur Durchführung in einem Drahtlos-Kommunikationssystem (10) für einen Maschinenraum (12) wenigstens einer Werkzeugmaschine, WZM (14), wobei das System eine Funk-Basisstation, FBS (32), im Maschinenraum betreibbare erste und zweite Feldgeräte, FG (24, 26), ein dem ersten FG zugeordnetes erstes Funk-Endgerät, FEG (28), und ein dem zweiten FG zugeordnetes zweites FEG (30) umfasst, wobei das Verfahren von der FBS durchgeführt wird und umfasst:
   drahtlose Kommunikation gemäß einem ersten Funk-Protokoll mit dem wenigstens einen ersten FEG für einen auf das wenigstens einen erste FG bezogenen Datenaustausch; und
   drahtlose Kommunikation gemäß wenigstens einem zweiten Funk-Protokoll, das sich vom ersten Funk-Protokoll unterscheidet, mit dem zweiten FEG für einen auf das wenigstens eine zweite FG bezogenen Datenaustausch.
10. Verfahren nach Ausführungsbeispiel 9, das von einem Drahtlos-Kommunikationssystem gemäß einem der Ausführungsbeispiele 2 bis 8 durchgeführt wird.

## Patentansprüche

1. Verfahren (400) zur drahtlosen Kommunikation zwischen einer ersten Funk-Basisstation, FBS (32A), und einem Funk-Endgerät, FEG (28), im Maschinenraum (12) wenigstens einer Werkzeugmaschine, WZM (14), wobei der WZM wenigstens ein Feldgerät, FG (24), zugeordnet ist, für das Daten drahtlos zwischen dem FEG als einem dem FG zugeordnetem Drahtlos-Endpunkt und der ersten FBS als einem einer Steuerung (16) der WZM zugeordneten Drahtlos-Endpunkt ausgetauscht werden sollen, wobei dem FEG ein FEG-Identifikator, FEG-ID, und der ersten FBS ein erster FBS-Identifikator, FBS-ID, zugeordnet ist, und wobei das Verfahren die folgenden, vom FEG ausgeführten Schritte umfasst:
drahtloses Senden (404) einer Anfrage-Nachricht, die wenigstens den FEG-ID und einen vom ersten FBS-ID verschiedenen zweiten FBS-ID enthält, welcher einer zweiten FBS (32B) zugeordnet ist, mit welcher das FEG zuletzt auf das FG bezogene Daten ausgetauscht hat; und
drahtloses Empfangen (410) einer Antwort-Nachricht von der ersten FBS als Reaktion auf die Anfrage-Nachricht, wobei die Antwort-Nachricht dem FEG anzeigt, dass (i) die erste FBS einen auf das FG bezogenen Datenaustausch mit dem FEG anfragt und (ii) ob die erste FBS über für den Datenaustausch erforderliche FEG-Konfigurationsinformationen verfügt.

2. Verfahren (400) zur drahtlosen Kommunikation zwischen einer ersten Funk-Basisstation, FBS (32A), und einem Funk-Endgerät, FEG (28), im Maschinenraum (12) wenigstens einer Werkzeugmaschine, WZM (14), wobei der WZM wenigstens ein Feldgerät, FG (24), zugeordnet ist, für das Daten drahtlos zwischen dem FEG als einem dem FG zugeordnetem Drahtlos-Endpunkt und der ersten FBS als einem einer Steuerung (16) der WZM zugeordneten Drahtlos-Endpunkt ausgetauscht werden sollen, wobei dem FEG ein FEG-Identifikator, FEG-ID, und der ersten FBS ein erster FBS-Identifikator, FBS-ID, zugeordnet ist, und wobei das Verfahren die folgenden, von der ersten FBS ausgeführten Schritte umfasst:
drahtloses Empfangen (404) einer Anfrage-Nachricht, die wenigstens den FEG-ID und einen zweiten FBS-ID, der sich vom ersten FBS-ID unterscheidet, enthält;
Überprüfen, ob die erste FBS auf FEG-Konfigurationsinformationen Zugriff hat, die der FEG-ID zugeordnet und die für einen auf das FG bezogenen Datenaustausch mit dem FEG erforderlich sind; und
drahtloses Senden (410) einer Antwort-Nachricht als Reaktion auf die Anfrage-Nachricht, wobei die Antwort-Nachricht dem FEG anzeigt, (i) dass die erste FBS den auf das FG bezogene Datenaustausch mit dem FEG anfragt und (ii) ob die erste FBS über die für den Datenaustausch erforderlichen FEG-Konfigurationsinformationen verfügt.

3. Verfahren nach einem der Ansprüche 1 und 2, wobei
die FEG-Konfigurationsinformationen einen oder mehrere der folgenden Parameter enthalten:
- eine oder mehrere von dem FEG unterstützte oder aktuell eingestellte Funkfrequenzen für den Datenaustausch,
- eines oder mehrere von dem FEG unterstützte oder aktuell eingestellte Funk-Protokolle,
- eine oder mehrere von dem FEG unterstützte oder aktuell eingestellte Sendungswiederholungsstrategien, und
- die FEG-ID.

4. Verfahren nach einem der Ansprüche 1 bis 3, wobei
die Antwort-Nachricht wenigstens den ersten FBS-ID enthält; wobei, als Option, das FEG lokal FBS-Konfigurationsinformationen abgespeichert hat, welche wenigstens den zweite FBS-ID enthalten, und auf den Erhalt der Antwort-Nachricht den zweiten FBS-ID durch den ersten FBS-ID aktualisiert.

5. Verfahren nach einem der vorhergehenden Ansprüche 1 bis 4, wobei
die Antwort-Nachricht dem FEG anzeigt, dass die erste FBS über die für den Datenaustausch mit dem FEG erforderlichen FEG-Konfigurationsinformationen verfügt, und ferner umfassend einen drahtlosen Austausch der auf das FG bezogenen Daten zwischen dem FEG und der ersten FBS ohne ein vorheriges Senden der FEG-Konfigurationsinformationen vom FEG an die erste FBS.

6. Verfahren nach Anspruch 4 in Kombination mit Anspruch 5, wobei
der Empfang des ersten FBS-ID in der Antwort-Nachricht dem FEG anzeigt, dass die erste FBS über die für den Datenaustausch mit dem FEG erforderlichen FEG-Konfigurationsinformationen verfügt.

7. Verfahren nach einem der Ansprüche 1 bis 6, wobei
die Antwort-Nachricht dem FEG anzeigt, dass die erste FBS die für den Datenaustausch mit dem FEG erforderlichen FEG-Konfigurationsinformationen benötigt, und ferner umfassend ein automatisches drahtloses Senden der FEG-Konfigurationsinformationen vom FEG an die erste FBS vor einem Austausch der auf das FG bezogenen Daten zwischen dem FEG und der ersten FBS; und/oder wobei
die Antwort-Nachricht wenigstens ein Informationselement, insbesondere ein Flag, enthält, das dem FEG anzeigt, ob die erste FBS die für den Datenaustausch mit dem FEG erforderlichen FEG-Konfigurationsinformationen benötigt oder darüber verfügt.

8. Verfahren nach einem der Ansprüche 1 bis 7, wobei
dem FEG verschiedene Sätze von FEG-Konfigurationsinformationen zuordenbar sind, und wobei die Anfrage-Nachricht ferner einen Informations-Identifikator enthält, welcher einem von der FEG aktuell eingestellten Satz von FEG-Konfigurationsinformationen zugeordnet ist, wobei als Option das Überprüfen, ob die erste FBS auf FEG-Konfigurationsinformationen Zugriff hat, welche für den auf das FG bezogenen Datenaustausch mit dem FEG erforderlich sind, ein Überprüfen umfasst, ob die erste FBS auf FEG-Konfigurationsinformationen Zugriff hat, die dem Informations-Identifikator zugeordnet sind.

9. Verfahren nach einem der Ansprüche 1 bis 8, wobei
der drahtlose Austausch der auf das FG bezogenen Daten über eine private Kommunikationsverbindung zwischen der ersten FBS und dem FEG erfolgt, insbesondere über eine Unicast-Verbindung, wobei als Option der erste FBS-Identifikator oder ein davon abgeleiteter Parameter zum Aufbau der privaten Kommunikationsverbindung zwischen der ersten FBS und dem FEG verwendet wird.

10. Funk-Endgerät, FEG (28), zur drahtlosen Kommunikation mit einer ersten Funk-Basisstation, FBS (32A), wobei das FEG zur Anordnung im Maschinenraum (12) wenigstens einer Werkzeugmaschine, WZM (14), ausgebildet ist, wobei der WZM wenigstens ein Feldgerät, FG (24), zugeordnet ist, für das Daten drahtlos zwischen dem FEG als einem dem FG zugeordnetem Drahtlos-Endpunkt und der ersten FBS als einem einer Steuerung (16) der WZM zugeordneten Drahtlos-Endpunkt ausgetauscht werden sollen, wobei dem FEG ein FEG-Identifikator, FEG-ID, und der ersten FBS ein erster FBS-Identifikator, FBS-ID, zugeordnet ist, und wobei das FEG dazu ausgebildet ist, das Verfahren gemäß Anspruch 1, optional in Kombination mit dem Verfahren gemäß einem der Ansprüche 3 bis 9 auszuführen.

11. Erste Funk-Basisstation, FBS (32A), zur drahtlosen Kommunikation mit wenigstens einem Funk-Endgerät, FEG (28), im Maschinenraum (12) wenigstens einer Werkzeugmaschine, WZM (18), wobei der WZM wenigstens ein Feldgerät, FG (24), zugeordnet ist, für das Daten drahtlos zwischen dem FEG als einem dem FG zugeordnetem Drahtlos-Endpunkt und der ersten FBS als einem einer Steuerung (16) der WZM zugeordneten Drahtlos-Endpunkt ausgetauscht werden sollen, wobei dem FEG ein FEG-Identifikator, FEG-ID, und der ersten FBS ein erster FBS-Identifikator, FBS-ID, zugeordnet ist, und wobei die erste FBS dazu ausgebildet ist, das Verfahren gemäß Anspruch 2, optional in Kombination mit dem Verfahren gemäß einem der Ansprüche 3 bis 9 auszuführen.

12. Erste Funk-Basisstation nach Anspruch 11, wobei
die erste FBS weiterhin dazu ausgebildet ist, eine drahtlose Kommunikation gemäß einem ersten Funk-Protokoll mit wenigstens einem ersten FEG für einen auf das wenigstens eine erste FG bezogenen Datenaustausch auszuführen; und
eine drahtlose Kommunikation gemäß wenigstens einem zweiten Funk-Protokoll, das sich vom ersten Funk-Protokoll unterscheidet, mit wenigstens einem zweiten FEG für einen auf das wenigstens eine zweite FG bezogenen Datenaustausch auszuführen.

13. Drahtlos-Kommunikationssystem (10) umfassend das FEG gemäß Anspruch 10 und die erste FBS gemäß Anspruch 11 oder 12.

14. Drahtlos-Kommunikationssystem nach Anspruch 13, ferner umfassend
wenigstens zwei Paletten (16) zur Aufnahme eines zu bearbeitenden Werkstücks (22), wobei zur Werkstückbearbeitung jede der Paletten wahlweise mit der wenigstens einen WZM koppelbar ist, wobei, als Option, auf einer oder mehreren der wenigstens zwei Paletten jeweils wenigstens ein FEG mit dem diesem FEG zugeordneten wenigstens einen FG angeordnet ist, wobei, als weitere Option, auf jede der Paletten ein Spannmittel angeordnet ist zur Aufnahme des zu bearbeitenden Werkstücks, und wobei das wenigstens eine FG ausgelegt ist, einen Parameter des Spannmittels, insbesondere einen Spanndruck und/oder eine Temperatur, zu messen.

15. Drahtlos-Kommunikationssystem nach Anspruch 14, wobei
jeder Palette ein Paletten-Identifikator zugeordnet ist und die wenigstens eine WZM konfiguriert ist, den Paletten-Identifikator der mit ihr gekoppelten Palette an die Steuerung der WZM zu kommunizieren, wobei, als Option, auf jeder Palette genau eines der FEG angeordnet ist und ferner als Paletten-Identifikator der entsprechende FEG-ID dient, wobei, als weitere Option, mit dem FEG-ID ein bestimmtes Funk-Protokoll verknüpft ist, wobei die WZM-Steuerung konfiguriert ist, den FEG-ID an die FBS zu kommunizieren, und wobei die FBS konfiguriert ist, basierend auf der von der WZM-Steuerung erhaltenen FEG-ID das erste oder das zweite Funk-Protokoll für die Drahtlos-Kommunikation mit dem dem FEG-ID zugeordneten FEG auszuwählen.
